# FASCICULE DE BREVET EUROPEEN

(11) **EP 2 260 203 B1**
(45) Date de publication et mention de la délivrance du brevet: **06.11.2013**
(21) Numéro de dépôt: 09722746.6
(22) Date de dépôt: 04.03.2009
(51) Int. Cl.: F03B 3/02, F03B 11/04, F03B 11/00

(54) **ORGANE FORMANT POINTE POUR ROUE DE MACHINE HYDRAULIQUE, ROUE ET MACHINE HYDRAULIQUE ÉQUIPÉES D'UN TEL ORGANE**
KRONENSPITZE FÜR EIN LAUFRAD EINER WASSERTURBINE SOWIE EIN LAUFRAD UND EINE WASSERTURBINE MIT BESAGTER KRONENSPITZE
TIP-FORMING MEMBER FOR A WHEEL OF A HYDRAULIC MACHINE, AND WHEEL AND HYDRAULIC MACHINE WHICH ARE EQUIPPED WITH SUCH A MEMBER

(30) Priorité: 05.03.2008 FR 0851430; 01.07.2008 FR 0854458
(43) Date de publication de la demande: 15.12.2010
(73) Titulaire: ALSTOM Renewable Technologies, 38100 Grenoble (FR)
(72) Inventeur: BERAL, Claude, F-38113 Veurey Voroize (FR); BERTEA, Jean-François, F-07300 Saint Jean De Muzols (FR); CHIAPPA, Rachel, F-38190 Sainte Agnes (FR); BAZIN, Danièle, F-38500 Voiron (FR); GAUDIN, Eric, F-38000 Grenoble (FR)
(74) Mandataire: Pesce, Michele
(86) Numéro de dépôt international: PCT/FR2009/050349
(87) Numéro de publication internationale: WO 2009/115730

(56) Documents cités:
- EP-A- 1 624 184
- CH-A- 328 203
- FR-A- 1 162 872
- FR-A- 1 203 142
- FR-A- 2 300 909
- GB-A- 799 013
- JP-A- 4 072 468
- US-A- 4 017 211

## Description

La présente invention a trait à un organe apte à être rapporté sur le plafond d'une roue de machine hydraulique. L'invention a également trait à une roue équipée d'un tel organe, ainsi qu'à une machine hydraulique comprenant une telle roue.

Dans le domaine des turbines hydrauliques, notamment des turbines Francis, il est connu d'équiper la partie aval du plafond d'une roue avec un organe axisymétrique, souvent dénommé « pointe » dont la surface externe prolonge sensiblement la surface mouillée du plafond de la roue, avec un diamètre qui peut aller en diminuant vers l'aval. Cet organe ou « pointe » vise à prolonger le guidage de l'écoulement en direction de l'axe de rotation de la roue. De la même manière, il est connu d'utiliser des organes ou pointes de guidage dans les turbinespompes et des autres turbines à pâles. Dans les turbines hydrauliques connues, l'écoulement traversant la roue peut donner naissance à des tourbillons ou turbulences, généralement qualifiés de « torche » et qui, à certaines charges, sont en forme de tire-bouchon. Ces turbulences en torche sont gênantes dans la mesure où elles provoquent des fluctuations de pression et/ou de puissance qui peuvent nuire à la stabilité du réseau qu'alimente la machine, ainsi qu'aux performances mécaniques de cette machine.

Il est connu de WO-A-2005/038243 d'utiliser une pointe comprenant deux surfaces, respectivement convergente et divergente en direction d'un axe de rotation de la roue, ce qui permet de limiter, dans une large mesure, les turbulences. Toutefois, à certains régimes, des turbulences demeurent.

Il est également connu de US-A-4 017 211 de prévoir des aubes courbes sur la surface extérieure d'une pointe de roue afin de participer au guidage de l'écoulement en cas de charge d'une turbine supérieure aux conditions de fonctionnement optimum pour lesquelles est conçue la roue. Une telle solution n'est pas adaptée pour réduire ou éliminer toutes les instabilités sous faible charge et s'avère compliquée à mettre en oeuvre car elle nécessite des études relativement élaborées pour définir la géométrie complexe des aubes, alors que la fabrication de ces aubes est délicate. En outre, le positionnement de ces aubes sur la surface extérieure de la pointe induit qu'elles ont une influence limitée sur les torches qui se développent au voisinage immédiat de l'axe de rotation de la roue.

Par ailleurs, GB-A-739 013 décrit une roue Francis équipée d'un cône qui porte des ailettes disposées radialement à l'extérieur de la surface du cône. A certain régimes, ces ailettes peuvent perturber le trajet d'un écoulement qui lèche la surface externe du cône.

C'est à ces inconvénients qu'entend plus particulièrement remédier l'invention en proposant un nouvel organe pouvant être rapporté sur le plafond d'une roue et qui permet de réduire et/ou d'éliminer les instabilités dues aux torches turbulentes, notamment sous faible charge.

Dans cet esprit, l'invention concerne un organe apte à être rapporté sur le plafond ou le moyeu d'une roue de machine hydraulique, cet organe étant pourvu d'une jupe dont une surface est apte à être disposée dans le prolongement d'une surface mouillée du plafond ou du moyeu. Cet organe est équipé d'au moins une ailette disposée radialement à l'intérieur de la jupe précitée, alors que cette ailette dépasse axialement, vers le bas, lorsque l'organe est rapporté sur la roue, par rapport à un bord inférieur libre de la jupe qui délimite une ouverture permettant la circulation de l'eau vers ou à partir du volume intérieur de la jupe et en ce que la portion de la ou de chaque ailette qui dépasse vers le bas par rapport au bord libre de la jupe permet d'influer sur l'écoulement au voisinage de l'axe de rotation de la roue.

Le fait que la portion de la ou de chaque ailette qui dépasse en dessous de la jupe permet d'influer sur l'écoulement au voisinage de l'axe de rotation de la roue réduit sensiblement les tourbillons ou turbulences dans cette zone. La ou les ailettes n'ont pas à avoir une forme d'aube complexe, ce qui facilite la conception et la fabrication d'un organe conforme à l'invention. Comme les ailettes sont disposées radialement à l'intérieur de la jupe, elles ne perturbent pas l'écoulement d'eau sur la surface radiale externe de la jupe qui prolonge la surface mouillée du plafond ou du moyeu de la roue. Ainsi, le fait d'agir localement sur les tourbillons ou turbulences au voisinage de l'axe de rotation de la roue ne diminue pas sensiblement le rendement global de l'installation.

Selon des aspects avantageux mais non obligatoires, un organe conforme à l'invention peut incorporer une ou plusieurs des caractéristiques des revendications 2 à 13, prises dans toutes combinaisons techniquement admissibles.

L'invention concerne également une roue de machine hydraulique équipée d'un organe tel que décrit ci-dessus. Une telle roue présente de meilleures caractéristiques hydrauliques et permet de changer la structure hydrodynamique de torches turbulentes qui ont tendance à se développer à proximité de son axe de rotation.

Enfin, l'invention concerne une machine hydraulique équipée d'une roue telle que mentionnée ci-dessus. Une telle machine peut être une turbine, une pompe ou une turbine-pompe.

Lorsque l'organe comprend des moyens d'ajustement de la position axiale des ailettes par rapport à la paroi, la machine est avantageusement équipée de moyens de commande des moyens d'ajustement en fonction de paramètres d'un écoulement qui traverse la roue.

L'invention sera mieux comprise et d'autres avantages de celle-ci apparaîtront plus clairement à la lumière de la description qui va suivre, de quatre modes de réalisation d'un organe et d'une roue Francis conformes à l'invention, donné uniquement à titre d'exemple et faite en référence aux dessins annexés dans lesquels :
- la figure 1 est une coupe axiale d'une roue de turbine conforme à l'invention ;
- la figure 2 est une vue en perspective à plus grande échelle de la pointe de la roue de la figure 1 ;
- la figure 3 est une vue de dessous de la pointe de la figure 2 ;
- la figure 4 est une coupe selon la ligne IV-IV à la figure 3, cette coupe correspondant à la représentation de la pointe à la figure 1 ;
- la figure 5 est une coupe selon la ligne V-V à la figure 3 ;
- la figure 6 est une coupe analogue à la figure 1 pour une roue de turbine conforme à un second mode de réalisation de l'invention et incorporant une pointe conforme à un second mode de réalisation de l'invention ;
- la figure 7 est une vue de dessous analogue à la figure 3 pour une pointe conforme à un troisième mode de réalisation de l'invention ;
- la figure 8 est une coupe selon la ligne VIII-VIII à la figure 7 ;
- la figure 9 est une coupe axiale analogue à la figure 1 pour une roue conforme à un quatrième mode de réalisation de l'invention ;
- la figure 10 est une vue en perspective de la pointe de la roue de la figure 9 ; et
- la figure 11 est une coupe selon la ligne XI-XI à la figure 10 mais à plus grande échelle.

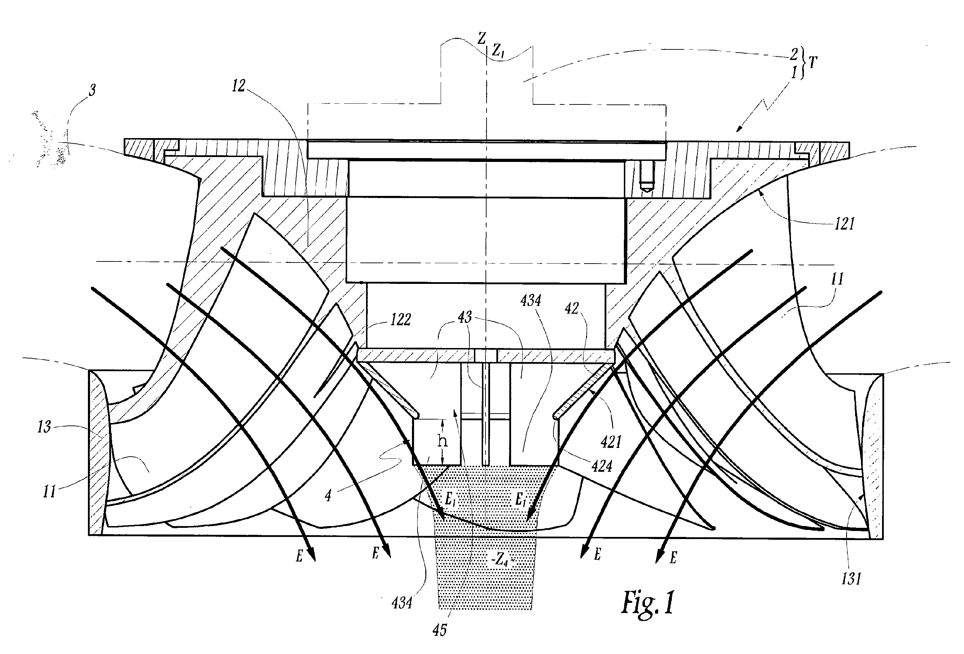

La roue de turbine Francis 1 représentée à la figure 1 est destinée à faire partie d'une turbine T de type Francis en étant reliée à un arbre 2 mobile en rotation autour d'un axe vertical Z. Cette roue est alimentée à partir d'une bâche 3 appartenant à une installation comprenant la turbine T et servant à transformer l'énergie hydraulique en énergie électrique ou mécanique, selon le matériel auquel l'arbre 2 est raccordé en partie haute.

Pour la clarté du dessin, les éléments 2 et 3 sont représentés en traits mixtes à la figure 1.

La roue 1 comprend des aubes 11 régulièrement réparties autour de l'axe central Z₁ de la roue qui est confondu avec l'axe Z en configuration installée de la turbine T. Un plafond 12 est prévu en partie supérieure et radiale interne de la roue 1, alors qu'une ceinture 13 borde les parties inférieures et radiales externes des aubes 11. Un conduit d'écoulement est créé entre chaque paire de deux aubes 11 adjacentes, ce conduit étant délimité par les aubes 11, par une surface mouillée 121 du plafond 12 et par une surface mouillée 131 de la ceinture 13.

Un écoulement E peut ainsi traverser la roue 1, en agissant sur les aubes 11, pour la mettre en rotation autour des axes Z₁ et Z confondus afin d'entraîner l'arbre 2.

Un organe 4 formant une pointe est monté sur la partie aval 122 du plafond 12. Cet organe 4 obture partiellement l'accès par l'aval au volume interne V₁₂ du plafond 12, ce volume devant généralement demeurer, avant mise en place de l'organe 4, accessible pour le montage de la roue 1, notamment pour sa fixation sur l'arbre 2, au moyen de boulons non représentés.

Dans ce qui suit, l'organe 4 est dénommé « pointe » selon la pratique. La pointe 4 comprend une bride 41 en forme de disque destinée à être fixée sur le plafond 12, par exemple au moyen de boulons non représentés. La pointe 4 comprend également une jupe 42 centrée sur un axe Z₄, tronconique et convergente en direction de l'axe Z₄ en s'éloignant de la bride 41. On note respectivement 421 et 422 les surfaces radiales externe et interne de la jupe 42. La jupe 42 est soudée sur la bride 41 au voisinage de son bord radial externe 411.

Dans la présente description, les termes « haut », « bas », « supérieur » et « inférieur » correspondent à l'orientation des parties de la roue 1 lorsque celle-ci est en configuration d'utilisation dans une turbine T à axe vertical. Ainsi, une partie « supérieure » est située au-dessus d'une partie « inférieure ».

En configuration montée de la pointe 4 sur la roue 1, la surface 421 prolonge la surface 121, ce qui contribue au guidage de l'écoulement E lorsqu'il traverse la roue.

On note 423 le bord supérieur de la jupe 42 et 424 son bord inférieur. On note respectivement D₄₂₃ et D₄₂₄ les diamètres des bords 423 et 424. La valeur de D₄₂₄ est inférieure à la valeur de D₄₂₃.

Quatre éléments 43 en forme d'ailettes planes sont disposés dans la pointe 4 et s'étendent radialement à l'intérieur de la jupe 42. Chaque ailette 43 épouse la forme interne de la jupe 42 et de la surface inférieure 412 de la bride 41. En d'autres termes, un bord externe 431 de chaque ailette 43 jouxte la surface interne 422 de la jupe 42, alors qu'un bord supérieur 432 de cette jupe jouxte la surface 412. Chaque ailette 43 peut ainsi être soudée sur la bride 41 et la jupe 42, radialement à l'intérieur de cette jupe.

Chaque ailette 43 est centrée sur un plan P₄ qui s'étend radialement par rapport à l'axe Z₄. Ainsi, chaque ailette 43 s'étend selon une direction radiale par rapport à l'axe Z₄.

Le bord radial interne 433 de chaque ailette 43 est parallèle à l'axe Z₄ et s'étend à une distance d₁ de l'axe Z₄ qui est non nulle, ce qui laisse un accès à une ouverture centrale 413 de la bride 41 par le dessous, lorsque la pointe 4 est montée sur la roue 1. Ceci permet d'accéder aux moyens de fixation de la pointe 4 sur la roue 1.

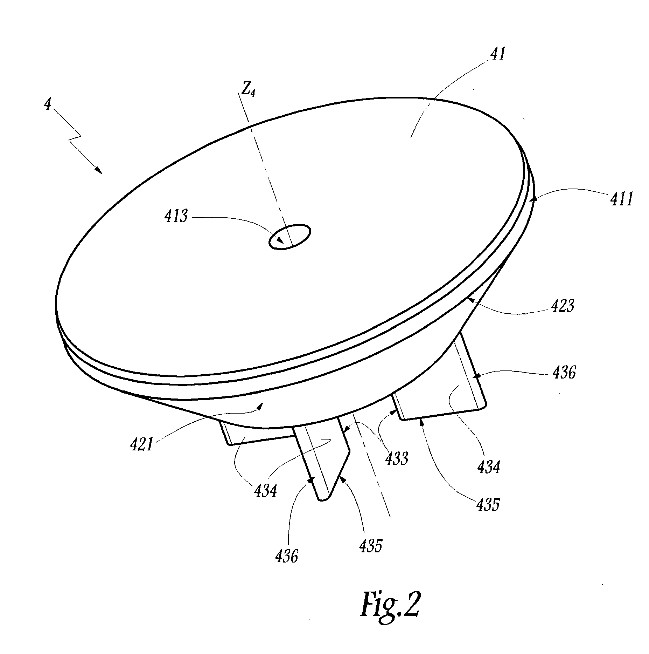

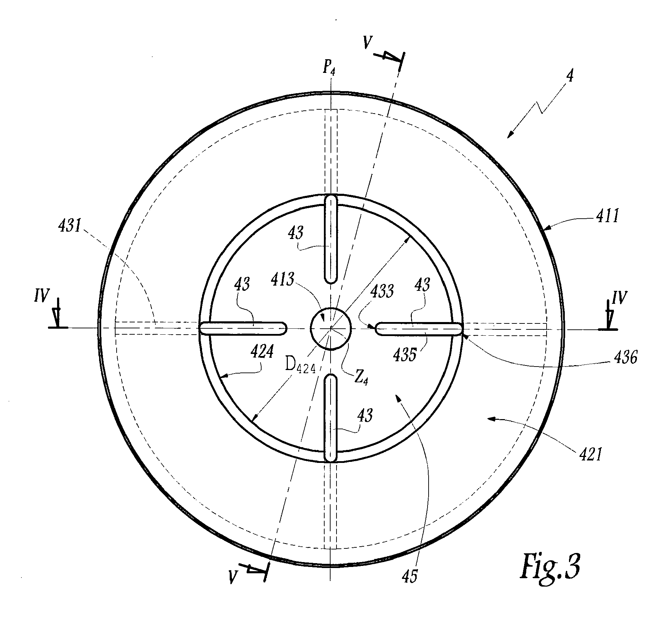

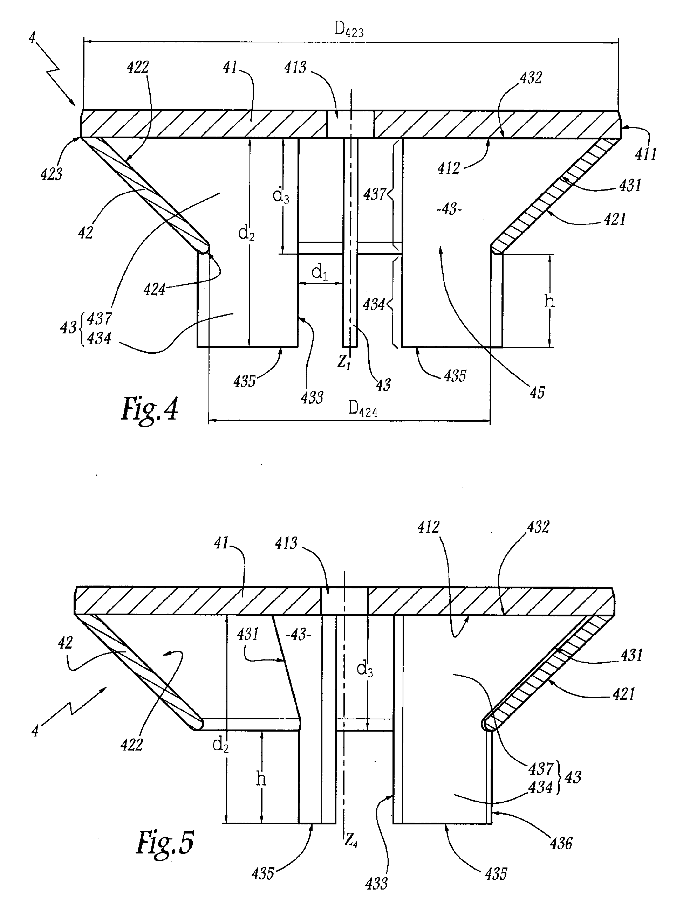

Chaque ailette 43 comprend une portion 434 qui dépasse axialement en-dessous du bord 424 de la jupe 42, c'est-à-dire qui s'étend, par rapport à la bride 41, au-delà de la jupe 42. On note 435 le bord inférieur d'une portion 434, ce bord étant, dans l'exemple des figures 1 à 5 perpendiculaire à l'axe Z₄. On note d₂ la distance entre la surface 412 et le bord 435 prise parallèlement à l'axe Z₄. On note d₃ la distance, prise également parallèlement à l'axe Z₄, entre la surface 412 et le bord 424. La distance d₂ est supérieure à la distance d₃, de telle sorte que la portion 434 de chaque ailette 43 dépasse en-deçà de la jupe 42, sur une hauteur h égale à la différence entre d₂ et d₃.

Ainsi, lorsque la pointe 4 est montée sur la roue 1, comme représentée sur la figure 1, les portions 434 des ailettes 43 qui dépassent de la jupe 42 vers le bas permettent d'imprimer à une partie E₁ de l'écoulement E, qui passe au voisinage des surfaces 121 et 421, un mouvement résultant de la rotation de la pointe 4. Ceci permet de diminuer sensiblement, voire de supprimer, les torches tourbillonnaires qui auraient tendance à se développer, notamment sous faible charge, au voisinage de l'axe Z, dans la zone représentée en grisé à la figure 1, en aval des surfaces mouillées 121 et 421.

On note 436 le bord radial externe d'une portion 434. Dans l'exemple des figures 1 à 5, ce bord est rectiligne et parallèle à l'axe Z₄.

Les bords 433 et 436 sont arrondis, avec une section en demi-disque de rayon qui dépend de l'épaisseur des ailettes 43.

On note 437 la portion de chaque ailette située axialement au niveau de la jupe 42, c'est-à-dire entre les bords 423 et 424, et radialement à l'intérieur de celle-ci. Les bords 431 et 432 de la portion 437 jouxtent les surfaces 422 et 412.

Une ailette 43 est formée de la réunion de ses portions 434 et 437.

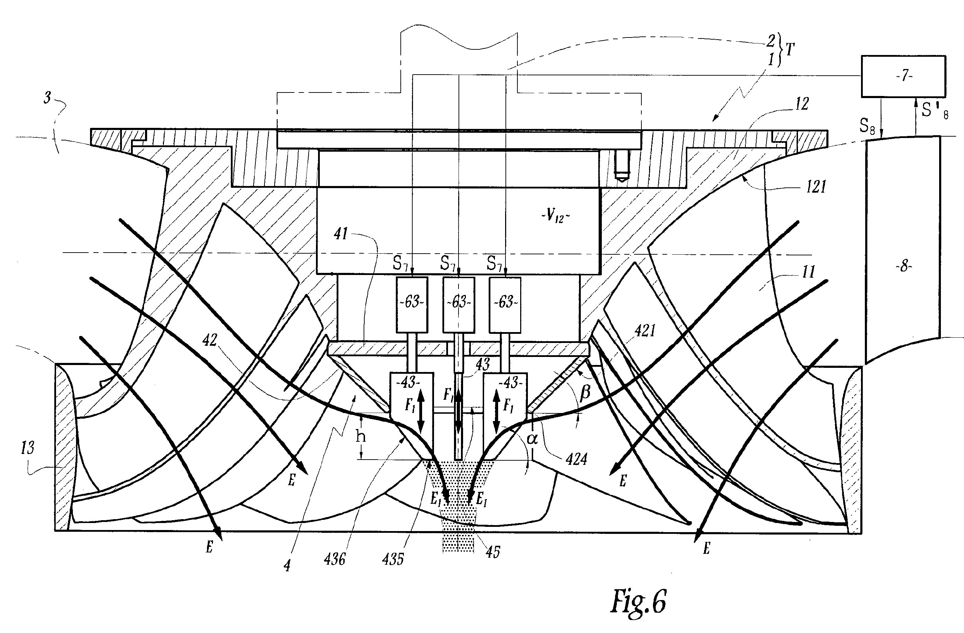

Dans le second mode de réalisation de l'invention représenté à la figure 6, les éléments analogues à ceux du premier mode de réalisation portent les mêmes références. On décrit ci-après essentiellement les différences entre ce second mode de réalisation et le premier. La pointe 4 de ce mode de réalisation est équipée de quatre ailettes 43 qui dépassent axialement en-deçà d'une jupe tronconique 42, sur une hauteur h qui est réglable dans la mesure où les ailettes 43 sont montées mobiles par rapport à la bride 41 et à la jupe 42 de la pointe 4, comme représenté par les doubles flèches F₁ à la figure 6.

La position axiale de chaque ailette 43 est pilotée par un servo-moteur 63 disposé dans le volume central V₁₂ du plafond 12 et commandé par une unité 7 de pilotage de la turbine T. Cette unité 7 est capable d'adresser à chacun des servomoteurs 63 un signal S₇ de commande qui peut tenir compte des paramètres de l'écoulement E dans la roue 1. Ces paramètres peuvent comprendre le débit ou la vitesse de l'eau de l'écoulement E, ou d'autres paramètres.

L'unité 7 commande les directrices 8 de l'installation à laquelle appartient la turbine T au moyen d'un signal S₈. L'unité 7 peut analyser un signal S'₈ lui communiquant la position d'une directrice pour commander les servomoteurs 63 en fonction de ce signal S₈. En d'autres termes, le signal S'₈ de position des directrices peut être interprété par l'unité 7 pour piloter les servomoteurs 63 au moyen du signal S₇, puisque le signal S₈ est représentatif de l'écoulement E.

Le cas échéant, les signaux S₇ peuvent être individualisés, de telle sorte que la position relative du bord 435 d'une ailette par rapport au bord 424, c'est-à-dire la hauteur h, peut être différente d'une ailette à l'autre.

Ainsi, dans ce mode de réalisation, la hauteur axiale h selon laquelle les portions 434 des ailettes 43 dépassent en deçà de la jupe 42 peut être ajustée, alors que la pointe 4 est montée sur la roue 2.

Comme précédemment, on note 436 le bord radial externe des portions 434. Le bord 436 n'est pas parallèle à l'axe central Z₄ de la pointe 4 mais convergent vers cet axe en se rapprochant du bord inférieur 435 des ailettes 43. Le demi angle au sommet α du bord 436 peut être choisi en fonction du demi angle au sommet β de la surface 421.

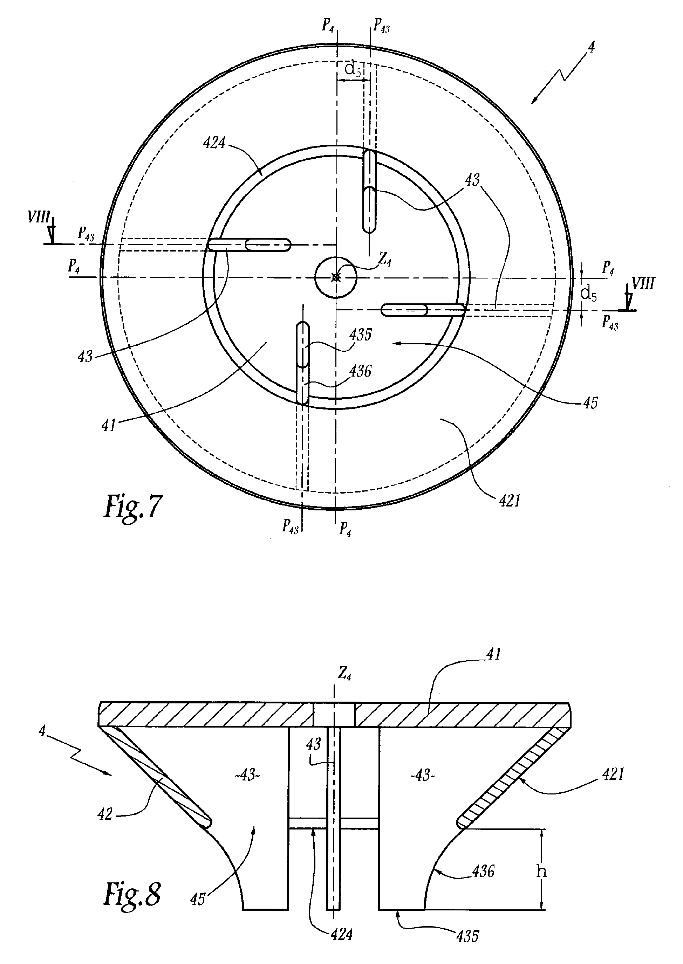

Dans le troisième mode de réalisation de l'invention représenté aux figures 7 et 8, les éléments analogues à ceux du premier mode de réalisation portent les mêmes références. On décrit ci-après essentiellement les différences entre ce troisième mode de réalisation et le premier. La pointe 4 de ce mode de réalisation comprend également quatre ailettes 43 dont des portions 434 dépassent en-deçà d'une jupe tronconique 42 sur une hauteur h non nulle. Le bord radial externe 436 des portions 434 est courbe, dans le prolongement de la surface externe 421 de la jupe 42.

En outre, les ailettes 43, qui sont planes, sont chacune centrées sur un plan P₄₃ parallèle à un plan P₄ radial par rapport à l'axe central Z₄ de la pointe 4. En d'autres termes, les ailettes 43 sont parallèles à des directions radiales correspondant aux plans P₄ dans le plan de la figure 7, mais décalées latéralement par rapport à ces directions, d'une distance non nulle d₅.

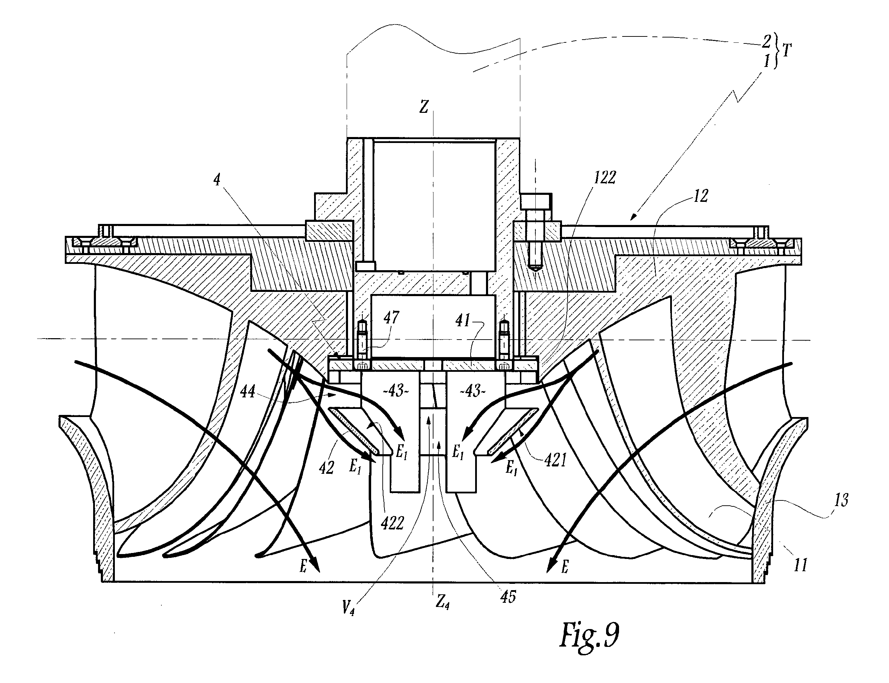

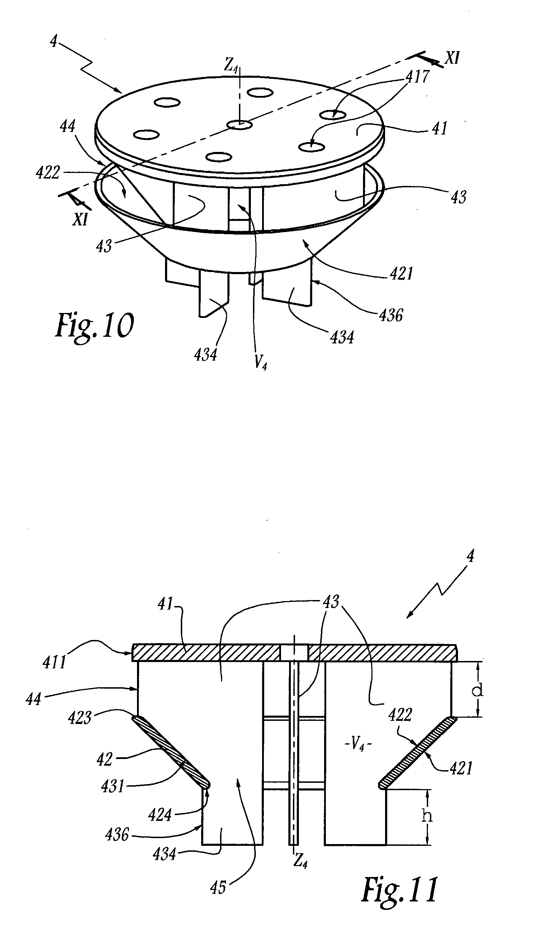

Dans le quatrième mode de l'invention représenté aux figures 9 à 11, les éléments analogues à ceux du premier mode de réalisation portent les mêmes références. La roue 1 de ce mode de réalisation est destinée à faire partie d'une turbine T de type Francis en étant reliée à un arbre 2 mobile en rotation autour d'un axe vertical Z. La roue 1 comprend des aubes 11 qui s'étendent entre un plafond 12 et une ceinture 13. Le plafond 12 définit une surface mouillée 121 destinée à être léchée par un écoulement E traversant la roue 1.

Un organe 4, que l'on qualifie de « pointe » dans ce qui suit, est monté sur la partie aval 122 du plafond 12 et comprend une bride 41 en forme de disque qui est destinée à être fixée sur le plafond 12 au moyen de vis 47 traversant des orifices 417 ménagés dans la bride 41. D'autres moyens de fixation de l'organe 4 sur la roue 1 peuvent être envisagés dans le cadre de la présente invention.

La pointe 4 comprend également une jupe annulaire 42 centrée sur un axe Z₄ destiné à être confondu avec l'axe Z en configuration montée de la pointe 4 et de la roue 1. Cette jupe est tronconique et convergente en direction de cet axe en s'éloignant de la bride 41. On note respectivement 421 et 422 les surfaces radiales externe et interne de la jupe 42

La jupe 42 est suspendue à la bride 41 par quatre éléments 43 en forme d'ailettes planes qui s'étendent chacune parallèlement à une direction radiale par rapport à l'axe Z₄. La jupe 42 est positionnée par rapport au plafond 12 de telle sorte que sa surface externe 421 est globalement dans le prolongement de la surface mouillée 121 lorsque l'organe 4 est monté sur la roue 1.

A la différence du premier mode de réalisation, une ouverture 44 est ménagée entre la bride 41 et la jupe 42. Le bord supérieur 423 de la jupe 42 s'étend à une distance d non nulle du bord radial externe 411 de la bride 41. Cette distance d est la hauteur axiale de l'ouverture 44, prise parallèlement à l'axe Z₄. L'ouverture 44 permet à une portion E₁ de l'écoulement E qui lèche la surface 121 de s'engager dans le volume interne V₄ de la pointe 4, c'est-à-dire le volume interne de la jupe 42. L'écoulement E₁ passe autour de la jupe 42, à la fois le long de la surface 421 et le long de la surface 422 qui prolongent globalement la surface 121, en étant légèrement décalées vers le bas par rapport à celle-ci. Les bords 431 des ailettes 43 qui s'étendent axialement au niveau de la jupe 42 jouxtent sa surface interne 422.

On note à la figure 9 que, compte tenu de l'introduction partielle de la pointe 4 dans la partie aval 122 du plafond 12, l'ouverture 44 est partiellement obturée par la partie 122.

Comme dans le premier mode de réalisation, les ailettes 43 dépassent en-deçà du bord inférieur 424 de la jupe 42 sur une hauteur h. On note 434 la portion des ailettes 43 qui dépasse de la jupe 42 vers le bas, lorsque la pointe 4 est rapportée sur la roue 1.

Dans tous les modes de réalisation, le bord radial externe 436 de la partie 434 des ailettes 43 qui dépasse en-dessous de la jupe 42 ne fait pas saillie, radialement et en s'éloignant de l'axe Z₄, de façon sensible par rapport au bord inférieur 424 de la jupe 42. Ainsi, l'action des ailettes 43 est concentrée sur la partie centrale de l'écoulement E₁ représenté aux figures 1 et 6 qui se dirige vers la zone représentée en grisé sur ces figures.

En pratique, la géométrie des ailettes 43 des différents modes de réalisation décrits ci-dessus est adaptée à celle de la roue 1 et à la nature de l'écoulement qui la traverse. L'invention a été représentée avec des ailettes 43 planes. En variante, ces ailettes peuvent être courbes avec une géométrie relativement simple.

Le nombre d'ailettes 43 d'une pointe 4 n'est pas nécessairement égal à quatre. Une pointe avec une seule ailette peut être envisagée, de même qu'une pointe avec deux, trois ou plus de quatre ailettes. Lorsque plusieurs ailettes sont utilisées, elles sont avantageusement régulièrement réparties autour de l'axe central de la jupe.

Selon une variante non représentée de l'invention, le bord inférieur 435 des ailettes 43 peut ne pas être perpendiculaire à l'axe Z₄. En particulier, ce bord peut être oblique ou courbe, voire constituer le bas du bord 436.

Dans les modes de réalisation décrits ci-dessus, la surface externe 421 de la jupe 42 est convergente en direction de l'axe Z₄ lorsqu'on s'éloigne du bord 423, c'est-à-dire lorsqu'on s'éloigne de la surface 121 en configuration montée de l'organe 4 sur la roue 1. La surface 421 est tronconique à génératrice rectiligne. Elle pourrait également avoir une génératrice courbe, voire ne pas converger vers l'axe Z₄, en s'éloignant du bord 423.

Selon un aspect de l'invention qui n'est pas représenté mais qui se déduit aisément du deuxième mode de réalisation, un organe formant pointe 4 peut être monté sur une roue 1 en étant mobile axialement, le long des axes Z, Z₁ et Z₄ qui sont alors confondus. Ceci permet d'adapter la position des surfaces 421 et éventuellement des ailettes 43, aux conditions de fonctionnement de la roue 1. Ce mouvement de la surface 421, c'est-à-dire de la jupe 42 dans les quatre modes de réalisation, peut être obtenu au moyen de servo-moteurs installés dans le volume intérieur V₁₂ du plafond de la roue, comme les servo-moteurs 63 du deuxième mode de réalisation.

Il est ainsi possible de « rétracter » une pointe 4 vers le haut afin que celle-ci ne fasse plus saillie, partiellement ou totalement dans la zone où passe l'écoulement E à partir du plafond 12 d'une roue 1.

Selon un aspect complémentaire, les ailettes 43 peuvent être prévues également rétractable c'est-à-dire mobile vers le haut par rapport à la surface 421 de l'organe 4. Pour ce faire, dans les quatre modes de réalisation, certaines ailettes peuvent être assemblées de façon rigide à la jupe 42 qu'elles supportent, sans dépasser en-deçà de celles-ci, alors que d'autres ailettes sont mobiles par rapport à cette jupe et peuvent dépasser en-deçà de celles-ci.

Les moyens d'ajustement de la position axiale de la jupe 42 par rapport au reste de la roue 1 sont avantageusement commandés en fonction des paramètres de l'écoulement E qui traverse la roue, comme les servo-moteurs 63 du deuxième mode de réalisation.

Dans tous les modes de réalisation, la jupe 42 est ouverte vers le bas, en ce sens que son bord inférieur est libre et définit une ouverture 45 permettant la circulation de l'eau vers ou à partir du volume intérieur de la jupe 42. Dans les modes de réalisation des figures 1 à 8, l'eau peut recirculer vers ce volume à travers l'ouverture 45. Dans le mode de réalisation des figures 9 à 11, l'eau qui pénètre dans ce volume par l'ouverture 44 en ressort par l'ouverture 45. Ceci permet aux parties 437 et équivalentes des ailettes 43 d'agir également sur l'écoulement, au voisinage de l'axe Z₁.

L'invention a été représentée avec un organe 4 pourvu d'une bride 41 de montage sur une roue 1 en forme de disque. Une telle bride n'est pas obligatoirement en forme de disque et peut être remplacée par d'autres parties de liaison au plafond ou au moyeu de la roue.

L'invention a été représentée avec une pointe 4 boulonnée sur le plafond 12 de la roue. Une telle pointe peut être rapportée de façon différente sur la roue, par exemple soudée. L'invention est également applicable au cas où l'organe formant pointe fait partie intégrante de la roue 1 en étant monobloc avec le plafond qu'il prolonge.

Selon une autre variante non représentée de l'invention applicable à tous les modes de réalisation, les ailettes 43 peuvent être jointives dans la portion centrale du volume interne de la jupe 42. En d'autres termes, les ailettes peuvent se rejoindre, leur bords 433 étant alors confondus. Elles forment alors des canaux parallèles. Ces canaux peuvent être utilisés pour diriger la partie de l'écoulement E₁ passant radialement à l'intérieur de la jupe 42, dans le mode de réalisation des figures 9 à 11.

Les caractéristiques techniques des différents modes de réalisation mentionnés ci-dessus peuvent être combinées entre elles. En particulier, les ailettes des premier, troisième et quatrième mode de réalisation peuvent être montées sur la pointe avec une possibilité de réglage en hauteur, comme les ailettes du deuxième mode de réalisation.

Dans ce cas, et dans le deuxième mode de réalisation, il est possible que seuls certains éléments soient réglables en hauteur. Par exemple, avec le quatrième mode de réalisation, deux ailettes peuvent être fixes et supporter la jupe 42, sans dépasser en-deçà du bord 424, alors que deux autres ailettes sont mobiles parallèlement à l'axe Z₄, à la fois par rapport à la bride 41 et à la jupe 42.

L'invention a été représentée lors de sa mise en oeuvre d'une roue du type Francis. Elle est cependant applicable à d'autres types de machines hydrauliques, notamment hélice, Deriaz ou Kaplan. Dans ce cas, l'organe de l'invention est accroché sur le moyeu de la turbine ou de la pompe.

## Revendications

1. Organe (4) apte à être rapporté sur le plafond (12) ou le moyeu d'une roue (1) de machine hydraulique (T), cet organe étant pourvu d'une jupe (42) dont une surface (421) est apte à être disposée dans le prolongement d'une surface mouillée (121) du plafond ou du moyeu, l'organe étant équipé d'au moins une ailette (43) disposée radialement à l'intérieur de la jupe (42), **caractérisé en ce que** cette ailette dépasse axialement (h), vers le bas lorsque l'organe est rapporté sur la roue, par rapport à un bord inférieur libre (424) de la jupe qui délimite une ouverture (45) permettant la circulation de l'eau vers ou à partir du volume intérieur de la jupe et **en ce que** la portion (434) de la ou de chaque ailette (43) qui dépasse vers le bas par rapport au bord libre (424) de la jupe (42) permet d'influer sur l'écoulement au voisinage de l'axe de rotation (Z) de la roue (1).

2. Organe selon la revendication 1, **caractérisé en ce que** la ou chaque ailette (43) a, dans sa partie (434) qui dépasse axialement vers le bas par rapport à la jupe (42), un bord radial externe (436) qui ne dépasse pas sensiblement, selon une direction radiale, du bord inférieur de la jupe (424), en s'éloignant de l'axe central (Z₄) de la jupe.

3. Organe selon l'une des revendications 1 ou 2, **caractérisé en ce que** l'ailette ou chaque ailette s'étend parallèlement à une direction (P₄) radiale par rapport à l'axe de symétrie (Z₄) de la jupe (42).

4. Organe selon l'une des revendications 1 à 3, **caractérisé en ce qu'**une portion (437) de la ou chaque ailette (43) s'étend axialement à l'intérieur de la jupe (42).

5. Organe selon la revendication 4, **caractérisé en ce qu'**un bord (431) de la portion (437) de la ou chaque ailette (43) qui s'étend à l'intérieur de la jupe (42) jouxte la surface interne (422) de la jupe.

6. Organe selon l'une des revendications 4 ou 5, **caractérisé en ce qu'**un bord (432) de l'ailette ou de chaque ailette jouxte une surface (412) d'une bride (41) de fixation de l'organe (4) sur le plafond (12) ou le moyeu de la roue (1), cette surface (412) étant dirigée vers le bas lorsque l'organe (4) est rapporté sur la roue.

7. Organe selon la revendication 6, **caractérisé en ce que** chaque ailette (43) est soudée sur la bride (41) et sur la jupe (42) radialement à l'intérieur de la jupe.

8. Organe selon l'une des revendications précédentes, **caractérisé en ce que** la longueur (h) sur laquelle un éléments dépasse axialement de la paroi est réglable (F₁).

9. Organe selon la revendication 8, **caractérisé en ce qu'**il comprend des moyens (63) d'ajustement (F₁), alors que l'organe (4) est rapporté sur la roue (1), de la position axiale (h) de l'élément (43) par rapport à la jupe (42).

10. Organe selon l'une des revendications précédentes, **caractérisé en ce que** la jupe (42) est mobile par rapport à la roue (1) parallèlement à son axe central (Z₄), alors que l'organe (4) est monté sur la roue.

11. Organe selon l'une des revendications précédentes, **caractérisé en ce que** chaque ailette (43) est pourvue d'un bord (435) perpendiculaire à l'axe central (Z₄) de la jupe et qui s'étend à distance (h) du bord inférieur (424) de la jupe (42) et en dessous de ce bord.

12. Organe selon l'une des revendications précédentes, **caractérisé en ce que** chaque ailette (43) est pourvue d'un bord libre (433) parallèle à l'axe central (Z₄) de la jupe et qui s'étend à une distance (d₁) de cet axe.

13. Organe selon l'une des revendications 1 à 11, **caractérisé en ce que** les ailettes (43) sont jointives dans une portion centrale du volume interne de la jupe (42).

14. Roue (1) de machine hydraulique (T) équipée d'un organe (4) selon l'une des revendications précédentes.

15. Machine hydraulique (T) équipée d'une roue (1) selon la revendication 14.

16. Machine hydraulique selon la revendication 15, **caractérisé en ce que** l'organe (4) est selon la revendication 9 et/ou la revendication 10 et la machine (T) est équipée de moyens (7) de commande (S₇) des moyens d'ajustement (63) de la position de l'élément (43) ou de la jupe (42), en fonction des paramètres (S'₈) d'un écoulement (E) traversant la roue (1).

## Patentansprüche

1. Bauteil (4), das an die Decke (12) oder die Nabe eines Laufrads (1) einer hydraulischen Maschine (T) angesetzt werden kann, wobei dieses Bauteil mit einer Schürze (42) versehen ist, von der eine Fläche (421) in der Verlängerung einer benetzten Fläche (121) der Decke oder der Nabe angeordnet sein kann, wobei das Bauteil mit mindestens einem Flügel (43) ausgestattet ist, der radial im Inneren der Schürze (42) angeordnet ist, **dadurch gekennzeichnet, dass** dieser Flügel, wenn das Bauteil an das Laufrad angesetzt ist, bezüglich eines freien unteren Rands (424) der Schürze axial (h) nach unten übersteht, der eine Öffnung (45) begrenzt, welche das Fließen des Wassers zum oder ausgehend vom inneren Volumen der Schürze erlaubt, und dass der Teil (434) des oder jedes Flügels (43), der bezüglich des freien Rands (424) der Schürze (42) nach unten übersteht, es ermöglicht, das Fließen in der Nähe der Drehachse (Z) des Laufrads (1) zu beeinflussen.

2. Bauteil nach Anspruch 1, **dadurch gekennzeichnet, dass** der oder jeder Flügel (43) in seinem Bereich (434), der bezüglich der Schürze (42) axial nach unten übersteht, einen äußeren radialen Rand (436) hat, der in radialer Richtung nicht wesentlich über den unteren Rand der Schürze (424) weg von der Mittelachse (Z₄) der Schürze übersteht.

3. Bauteil nach einem der Ansprüche 1 oder 2, **dadurch gekennzeichnet, dass** der Flügel oder jeder Flügel sich parallel zu einer radialen Richtung (P₄) bezüglich der Symmetrieachse (Z₄) der Schürze (42) erstreckt.

4. Bauteil nach einem der Ansprüche 1 bis 3, **dadurch gekennzeichnet, dass** ein Teil (437) des oder jedes Flügels (43) sich axial innerhalb der Schürze (42) erstreckt.

5. Bauteil nach Anspruch 4, **dadurch gekennzeichnet, dass** ein Rand (431) des Teils (437) des oder jedes Flügels (43), der sich im Inneren der Schürze (42) erstreckt, an die Innenfläche (422) der Schürze angrenzt.

6. Bauteil nach einem der Ansprüche 4 oder 5, **dadurch gekennzeichnet, dass** ein Rand (432) des Flügels oder jedes Flügels an eine Fläche (412) eines Befestigungsflanschs (41) des Bauteils (4) an der Decke (12) oder Nabe des Laufrads (1) angrenzt, wobei diese Fläche (412) nach unten gerichtet ist, wenn das Bauteil (4) an das Laufrad angesetzt ist.

7. Bauteil nach Anspruch 6, **dadurch gekennzeichnet, dass** jeder Flügel (43) radial innerhalb der Schürze auf den Flansch (41) und auf die Schürze (42) geschweißt wird.

8. Bauteil nach einem der vorhergehenden Ansprüche, **dadurch gekennzeichnet, dass** die Länge (h), über die ein Element axial von der Wand übersteht, einstellbar ist (F₁).

9. Bauteil nach Anspruch 8, **dadurch gekennzeichnet, dass** es Einrichtungen (63) zur Einstellung (F₁), wenn das Bauteil (4) an das Laufrad (1) angesetzt wird, der axialen Stellung (h) des Elements (43) bezüglich der Schürze (42) enthält.

10. Bauteil nach einem der vorhergehenden Ansprüche, **dadurch gekennzeichnet, dass** die Schürze (42) bezüglich des Laufrads (1) parallel zu ihrer Mittelachse (Z₄) beweglich ist, wenn das Bauteil (4) an das Laufrad montiert wird.

11. Bauteil nach einem der vorhergehenden Ansprüche, **dadurch gekennzeichnet, dass** jeder Flügel (43) mit einem Rand (435) lotrecht zur Mittelachse (Z₄) der Schürze versehen ist, der sich in Abstand (h) zum unteren Rand (424) der Schürze (42) und unter diesem Rand erstreckt.

12. Bauteil nach einem der vorhergehenden Ansprüche, **dadurch gekennzeichnet, dass** jeder Flügel (43) mit einem freien Rand (433) parallel zur Mittelachse (Z₄) der Schürze versehen ist, der sich in einem Abstand (d₁) von dieser Achse erstreckt.

13. Bauteil nach einem der Ansprüche 1 bis 11, **dadurch gekennzeichnet, dass** die Flügel (43) in einem zentralen Bereich des inneren Volumens der Schürze (42) miteinander verbunden sind.

14. Laufrad (1) einer hydraulischen Maschine (T), das mit einem Bauteil (4) nach einem der vorhergehenden Ansprüche ausgestattet ist.

15. Hydraulische Maschine (T), die mit einem Laufrad (1) nach Anspruch 14 ausgestattet ist.

16. Hydraulische Maschine nach Anspruch 15, **dadurch gekennzeichnet, dass** das Bauteil (4) gemäß Anspruch 9 und/oder Anspruch 10 ist, und dass die Maschine (T) mit Einrichtungen (7) zum Steuern (S₇) der Einstelleinrichtungen (63) der Stellung des Elements (43) oder der Schürze (42) abhängig von den Parametern (S'₈) einer das Laufrad (1) durchquerenden Strömung (E) ausgestattet ist.

## Claims

1. Member (4) that can be attached to the crown (12) or the hub of a wheel (1) of a hydraulic machine (T), this member being provided with a skirt (42), one surface (421) of which can be arranged in the continuation of a wet surface (121) of the crown or the hub, the member being equipped with at least one fin (43) arranged radially inside the skirt (42), **characterized in that** this fin projects axially (h) in a downward direction when the member is attached to the wheel, relative to a free lower edge (424) of the skirt that defines an opening (45) allowing the water to circulate toward or from the internal space of the skirt, and **in that** the portion (434) of the or each fin (43) that projects in a downward direction relative to the free edge (424) of the skirt (42) makes it possible to affect the flow in the vicinity of the axis of rotation (Z) of the wheel (1).

2. Member according to Claim 1, **characterized in that** the or each fin (43) has, in its part (434) which projects axially in a downward direction relative to the skirt (42), an outer radial edge (436) which does not project substantially in a radial direction from the lower edge of the skirt (424) in a direction moving away from the central axis (Z₄) of the skirt.

3. Member according to either of Claims 1 and 2, **characterized in that** the fin or each fin extends parallel to a direction (P₄) that is radial with respect to the axis of symmetry (Z₄) of the skirt (42).

4. Member according to one of Claims 1 to 3, **characterized in that** a portion (437) of the or each fin (43) extends axially inside the skirt (42).

5. Member according to Claim 4, **characterized in that** an edge (431) of the portion (437) of the or each fin (43) which extends inside the skirt (42) adjoins the inner surface (422) of the skirt.

6. Member according to either of Claims 4 and 5, **characterized in that** an edge (432) of the fin or each fin adjoins a surface (412) of a bracket (41) for fixing the member (4) to the crown (12) or the hub of the wheel (1), this surface (412) facing downward, when the member (4) is attached to the wheel.

7. Member according to Claim 6, **characterized in that** each fin (43) is welded to the bracket (41) and to the skirt (42) radially inside the skirt.

8. Member according to one of the preceding claims, **characterized in that** the length (h) by which an element projects axially from the wall can be adjusted (F₁).

9. Member according to Claim 8, **characterized in that** it comprises means (63) for adjusting (F₁) the axial position (h) of the element (43) relative to the skirt (42), when the member (4) is attached to the wheel (1).

10. Member according to one of the preceding claims, **characterized in that** the skirt (42) can move relative to the wheel (1) parallel to its central axis (Z₄), when the member (4) is mounted to the wheel.

11. Member according to one of the preceding claims, **characterized in that** each fin (43) is provided with an edge (435) that is perpendicular to the central axis (Z₄) of the skirt and extends by a distance (h) from the lower edge (424) of the skirt (42) and beneath this edge.

12. Member according to one of the preceding claims, **characterized in that** each fin (43) is provided with a free edge (433) parallel to the central axis (Z₄) of the skirt and which extends by a distance (d₁) from this axis.

13. Member according to one of Claims 1 to 11, **characterized in that** the fins (43) are joined in a central portion of the internal space of the skirt (42).

14. Wheel (1) for a hydraulic machine (T) equipped with a member (4) according to one of the preceding claims.

15. Hydraulic machine (T) equipped with a wheel (1) according to Claim 14.

16. Hydraulic machine according to Claim 15, **characterized in that** the member (4) is according to Claim 9 and/or Claim 10 and the machine (T) is equipped with means (7) for activating (S7) the means (63) for adjusting the position of the element (43) or the skirt (42), as a function of the parameters (S'8) of a flow (E) traversing the wheel (1).
